# EUROPEAN PATENT APPLICATION

(11) **EP 3 168 506 A1**
(43) Date of publication of application: **17.05.2017**
(21) Application number: 14836736.0
(22) Date of filing: 19.09.2014
(51) Int. Cl.: F16J 9/26, C22C 38/18, C22C 38/24, F02F 5/00, C22C 38/00

(54) **PRESSURE RING**

(30) Priority: 12.08.2013 JP 2013167933; 11.08.2014 JP 2014163460
(71) Applicant: Kabushiki Kaisha Riken, Tokyo 102-8202 (JP)
(72) Inventor: SHIMA Yuji, Kashiwazaki-shi Niigata 945-8555 (JP); TAKAHASHI Junya, Kashiwazaki-shi Niigata 945-8555 (JP)
(74) Representative: Hooiveld, Arjen Jan Winfried
(86) International application number: PCT/JP2014/074926
(87) International publication number: WO 2015/023002

(57) **Abstract**

A compression ring that makes it possible to suppress adhesion of a piston material to the compression ring is provided. The compression ring 11 includes an annular main body 12 that is constituted of a steel material consisting of 0.45 to 0.55 mass% of C, 0.15 to 0.35 mass% of Si, 0.65 to 0.95 mass% of Mn, 0.80 to 1.10 mass% of Cr, 0.25 mass% or less of V, less than 0.010 mass% of P, and a balance containing Fe and an inevitable impurity.

## Description

### Technical Field

The present invention relates to a pressure ring (compression ring).

### Background Art

In recent years, automobile engines have been designed to have an improved fuel efficiency, a low emission, and a high power for the purpose of suppressing environmental load. Therefore, increasing the compression ratio of an air fuel mixture sucked in a combustion chamber of an automobile engine and increasing the engine load are required. However, when the compression ratio is increased, the temperature in the combustion chamber is generally increased, and knocking is likely to occur. As a usual measure against knocking, the ignition timing (spark advance) is delayed. In this case, a high thermal efficiency cannot be maintained. Accordingly, studies are also conducted to lower the temperature of a combustion chamber wall. In order to lower the temperature of the combustion chamber wall, it is effective to lower the temperature of a piston crown surface that is exposed in the combustion chamber. In order to lower the temperature of the piston crown surface, it is most effective to dissipate the heat of the piston to a cooled cylinder wall through a compression ring attached near the piston crown surface. That is, among the three basic functions of a piston ring, a gas-sealing function, a thermal conduction function, and an oil control function, the thermal conduction function of the piston ring is utilized.

Moreover, when a material (hereinafter, referred to as "piston material") that constitutes the piston is aluminum (Al), the aluminum softens as the temperature of the combustion chamber is increased. In this case, fatigue fracture of the piston might occur in a ring groove of the piston due to the impingement and sliding of the compression ring under a high temperature condition. As a result thereof, wear of the ring groove and adhesion of aluminum to the compression ring easily occur.

As a piston ring excellent in thermal conductivity, Patent Literature 1 for example discloses a piston ring containing predetermined amounts of C, Si, Mn, and Cr, in which a parameter calculated from the contents thereof is in a predetermined numerical value range. Moreover, Patent Literature 2 also discloses a piston ring having a high thermal conductivity.

### Citation List

### Patent Literature

Patent Literature 1: Japanese Unexamined Patent Publication No. 2009-235561
Patent Literature 2: Japanese Unexamined Patent Publication No. 2011-247310

### Summary of Invention

### Technical Problem

When chemical conversion treatment using a phosphate (for example, chemical conversion treatment using manganese phosphate) is applied to a side face of a piston ring having a conventional composition for the purpose of preventing adhesion of aluminum as a piston material to the compression ring and of rust prevention, the piston ring hardly dissolves in the acidic treatment liquid. Therefore, it is necessary to enhance the reactivity of the treatment liquid with the piston ring by increasing the acid concentration of the treatment liquid or other methods in order to precipitate a phosphate on the side face of the piston ring. In enhancing the reactivity, partial corrosion (erosion) occurs in the main body (base material) of the piston ring. In this case, the surface roughness of a phosphate film formed by the chemical conversion treatment and the main body (base material) becomes large. When such a piston ring slides with the surface of the ring groove of the piston, the surface of the ring groove is unusually worn. As a result, the adhesion of aluminum to the piston ring easily occurs.

The subject of the present invention is to provide a compression ring that makes it possible to suppress the adhesion of a piston material to the compression ring.

### Solution to Problem

A compression ring according to an embodiment of the present invention comprises an annular main body constituted of a steel material, the steel material consisting of: 0.45 to 0.55 mass% of C; 0.15 to 0.35 mass% of Si; 0.65 to 0.95 mass% of Mn; 0.80 to 1.10 mass% of Cr; 0.25 mass% or less of V; less than 0.010 mass% of P; and a balance including Fe and an inevitable impurity. The compression ring according to an embodiment of the present invention may comprise a first film including a phosphate, the first film provided on planar side faces facing (being opposed to) each other in parallel on a surface of the main body, or on at least one of an outer circumferential face and an inner circumferential face of the main body.

A compression ring according to another embodiment of the present invention comprises an annular main body constituted of a steel material, the steel material consisting of: 0.45 to 0.55 mass% of C; 0.15 to 0.35 mass% of Si; 0.65 to 0.95 mass% of Mn; 0.80 to 1.10 mass% of Cr; 0.25 mass% or less of V; less than 0.010 mass% of P; 0.02 to 0.25 mass% of Cu; and a balance including Fe and an inevitable impurity. The compression ring according to an embodiment of the present invention may comprise a first film including a phosphate, the first film provided on at least one of planar side faces facing (being opposed to) each other in parallel on a surface of the main body, or on an outer circumferential face or inner circumferential face of the main body.

In the compression ring according to the embodiments of the present invention, the content of V in the steel material may be less than 0.15 mass%.

In the compression ring according to the embodiments of the present invention, a metal structure of the main body is a metal structure including spheroidal cementite dispersed in a tempered martensitic matrix, the average particle diameter of the spheroidal cementite may be 0.1 to 1.5 µm, and the area occupancy of the spheroidal cementite in a cross section of the metal structure may be 1 to 6%.

The thermal conductivity of the compression ring according to the embodiments of the present invention may be 35 W/m·K or more, and a loss of tangential force of the compression ring after heating at 300°C for 3 hours may be 4% or less.

In the compression ring according to the embodiments of the present invention, the surface roughness Rz of the first film may be 4.5 µm or less.

A second film may be provided on the outer circumferential face of the main body, and the second film may have at least one film selected from the group consisting of a titanium nitride film, a chromium nitride film, a titanium carbonitride film, a chromium carbonitride film, a chromium film, a titanium film, and a diamond-like carbon film.

### Advantageous Effects of Invention

According to the compression ring of the present invention, a compression ring that makes it possible to suppress adhesion of a piston material to the compression ring is provided.

### Brief Description of Drawings

[Figure 1] Figure 1 shows a secondary electron image of a cross section of Example 1 taken with a scanning electron microscope.
[Figure 2] Figure 2 shows a secondary electron image of a cross section of Comparative Example 1 taken with a scanning electron microscope.
[Figure 3] Figure 3 is a graph showing the relation between thermal conductivity and a loss of tangential force in Examples 1 and 6 and Comparative Examples 2 to 4.
[Figure 4] Figure 4 is a diagram schematically illustrating an aluminum adhesion test.
[Figure 5] Figure 5 is a graph showing the relation between the sum of composition of alloying elements and thermal conductivity in steel materials used for piston rings.
[Figure 6] Figure 6 is a plan view of a compression ring according to the present embodiments.
[Figure 7] Figure 7a is a perspective view of a compression ring according to the present embodiments, and Figure 7b is a sectional view taken along line b-b in Figure 7a.
[Figure 8] Figure 8 is a schematic diagram illustrating an inner structure (crystal grain boundaries) of a main body included in a compression ring according to the present embodiments.
[Figure 9] Figure 9 is a schematic diagram illustrating a fatigue test method for a compression ring.

### Description of Embodiments

Hereinafter, embodiments for utilizing the compression ring of the present invention will be described. However, the present invention is not limited to the following embodiments.

### (First Embodiment)

The compression ring according to the first embodiment is a piston ring for an internal-combustion engine (for example, an automotive engine). The compression ring is fitted to, for example, a ring groove formed on a side face of a columnar piston included in an internal-combustion engine. The piston is inserted in a combustion chamber (cylinder) of an engine. The compression ring may also be a ring exposed to an environment where thermal load of an engine is high.

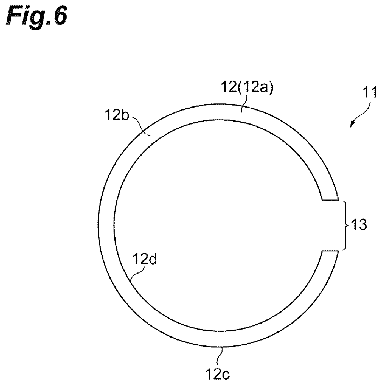

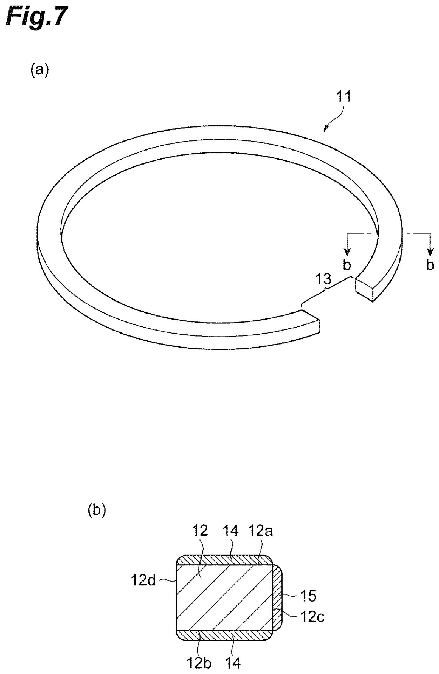

The structure of the compression ring according to the first embodiment is described. As illustrated in Figure 6, Figure 7a, and Figure 7b, the compression ring 11 comprises an annular main body 12 (base material) and a first film 14. An joint 13 is formed in the annular main body 12. That is, "annular" does not necessarily mean a closed circle. The annular main body 12 may be a perfect circular shape or an elliptical shape. The annular main body 12 has planar side faces 12a, 12b facing each other in parallel, an outer circumferential face 12c, and an inner circumferential face 12d.

The main body 12 is constituted of a steel material containing Fe as a main component. The steel material is another term for an alloy material that contains iron as a main component. The steel material that constitutes the main body 12 consists of: 0.45 to 0.55 mass% of C (carbon); 0.15 to 0.35 mass% of Si (silicon); 0.65 to 0.95 mass% of Mn (manganese); 0.80 to 1.10 mass% of Cr (chromium); 0.25 mass% or less of V (vanadium); less than 0.010 mass% of P (phosphorus); and the balance including Fe (iron) and an inevitable impurity.

The steel material is drawn to prepare a wire material having a predetermined cross sectional shape, and the main body 12 is formed by processing the wire material. For example, the wire material is molded into a free shape of a ring with a cam molding machine, and thereafter heat treatment of the wire material is applied for removing strain. After the heat treatment, the side faces, outer periphery, joint, and the like of the ring-shaped wire material are ground, and the wire material is further processed into a predetermined ring shape to obtain the main body 12.

As illustrated in Figure 7b, the first film 14 is provided on the side face 12a of the main body 12. The first film 14 may cover part or the whole of the side face 12a of the main body 12. The first film 14 suppresses the adhesion of a piston material (for example, aluminum) to the compression ring. Moreover, the first film 14 suppresses the occurrence of rust in the compression ring. The first film 14 includes a phosphate. The phosphate may be, for example, at least one selected from the group consisting of manganese phosphate, zinc phosphate, and iron phosphate. The first film 14 may consist of only a phosphate. The thickness of the first film 14 is, for example, 1.0 to 5.0 µm.

The first film 14 may be formed by, for example, applying chemical conversion treatment to the side face 12a of the main body 12. The chemical conversion treatment is treatment in which a material to be treated is immersed in an adjusted acidic chemical conversion treatment liquid to precipitate, on the surface of the material surface, an insoluble product having a sticking property by chemical reaction on the surface of the material. The chemical conversion treatment means, for example, treatment in which the surface of the side face 12a or 12b of the main body 12 is covered with a phosphate by a chemical method (phosphate treatment). The phosphate may be, for example, manganese phosphate, zinc phosphate, iron phosphate, or zinc calcium phosphate. In the chemical conversion treatment, when the main body 12 is immersed in, for example, an acidic treatment liquid containing a phosphate, the pH of the surface of the main body 12 is increased by anode reaction (lytic reaction) and cathode reaction (reduction reaction), and an insoluble compound precipitates on the side faces 12a, 12b and the inner circumferential face 12d. Or, an insoluble compound directly precipitates on the surface of the main body 12 by reduction reaction. The first film 14 may be provided only on the side face 12a of the main body 12, or only on the side face 12b. The first film 14 may also be provided on both faces of the side face 12a and the side face 12b. The first film 14 may be provided not only on the side face 12a or 12b but also on the inner circumferential face 12d.

Hereinafter, each element contained in the steel material that constitutes the main body 12 will be described in detail. Hereinafter, among the elements contained in the steel material that constitutes the main body 12, elements excluding the balance are written as "alloying elements".

C is solid-soluted into Fe to contribute to an improvement of the strength of the compression ring. Moreover, C forms a carbide to contribute to wear resistance of the compression ring. When at least 0.45 mass% or more of C is contained in the steel material, the carbide is formed in the main body 12 to improve the strength and wear resistance of the compression ring. However, C as well as N (nitrogen) is an element that forms an interstitial solid solution together with Fe. Therefore, when the content of C is too large, stretching or drawing of the steel material for use in the formation of a piston ring or the piston ring itself becomes difficult to conduct. Moreover, when the content of C is too large, the content of a carbide of Cr in the main body 12 becomes too large and the effects specific to C and Cr respectively are weakened. In order to suppress the occurrence of these problems, the content of C in the steel material is required to be 0.55 mass% or less. The content of C in the steel material may be 0.47 to 0.52 mass%.

Si is solid-soluted into Fe to improve the heat resistance of the compression ring. When at least 0.15 mass% or more of Si is contained in the steel material, the heat resistance of the compression ring is easily improved. On the other hand, by setting the content of Si in the steel material to 0.35 mass% or less, lowering of the cold workability of the compression ring is suppressed and lowering of the thermal conductivity of the compression ring is also suppressed. Thereby, a temperature increase of a sliding face (face that makes contact with a piston) of the compression ring is suppressed, and the seizure resistance of the sliding face improves. The content of Si in the steel material may be 0.22 to 0.27 mass%.

Mn is contained in the steel material as a deoxidizer during production of an ingot (steel material). Mn prevents oxidation of Si and facilitates the formation of a solid-solution of Si with Fe. That is, Mn prepares a preferable condition for the formation of a solid-solution of Si. When 0.65 mass% or more of Mn is contained in the steel material, Si whose content is small is not oxidized, but solid-soluted into Fe, and the effect of Si is exhibited. On the other hand, lowering of the hot workability of the compression ring is suppressed by setting the content ratio of Mn in the steel material to 0.95 mass% or less. The content of Mn in the steel material may be 0.82 to 0.88 mass%.

Cr forms a carbide to impart wear resistance to the compression ring. When 0.80 mass% or more of Cr is contained in the steel material, the wear resistance of the compression ring is easily improved. On the other hand, lowering of the toughness of the compression ring resulting from the formation of an excessive amount of a carbide is suppressed by setting the content of Cr in the steel material to 1.10 mass% or less. Moreover, that a large amount of α-Fe is solid-soluted into the main body of the compression ring is suppressed, and lowering of the workability of the compression ring is suppressed. The content of Cr in the steel material may be 0.95 to 1.08 mass%.

V combines with C and/or N to make the steel structure in the main body fine and disperse, thereby preventing crystal grains from coarsening therein. When 0.15 mass% or more of V is contained in the steel material, toughness of the compression ring is easily improved. On the other hand, V is an expensive element, and therefore cost for the compression ring is suppressed by setting the content of V in the steel material to 0.25 mass% or less. The content of V in the steel material may be 0.15 to 0.25 mass% or 0.15 to 0.20 mass%. It is to be noted that since V is an expensive element, the content of V in the steel material may be 0 mass% or more and less than 0.15 mass% in the case of a compression ring for use in an environment where thermal load is not so high.

Precipitation (segregation) of Fe₃P or the like along the crystal grain boundaries in the main body is suppressed by setting the content of P in the steel material to less than 0.010 mass%. When Fe₃P or the like is segregated, the fatigue strength of the compression ring is lowered. Moreover, segregated Fe₃P is difficult to dissolve in an acid, and therefore there is a risk that the main body 12 (side face 12a) is locally dissolved in applying chemical conversion treatment to the main body (base material). That is, the reactivity of the main body 12 is locally worsened during chemical conversion treatment, and the surface roughness of the main body (side face 12a) becomes large after the chemical conversion treatment. In order to suppress the occurrence of such a problem, the content of P in the steel material is required to be less than 0.010 mass%. It is more preferable that the content of P is smaller for the purpose of applying a stable chemical conversion treatment to the compression ring. However, much cost is required to reduce the content of P in the steel material. The lower limit value of the content of P that is achievable at realistically low cost is, for example, about 0.002 mass%. The content of P in the steel material may be 0.002 to 0.009 mass%, 0.002 to 0.008 mass%, 0.003 to 0.009 mass%, 0.003 to 0.008 mass%, 0.004 to 0.009 mass%, or 0.004 to 0.008 mass%.

As mentioned above, P causes significant segregation of Fe₃P that is difficult to dissolve in an acid, and the segregation of Fe₃P causes the problem in chemical conversion treatment. In order to suppress the occurrence of the problem, conventional chemical conversion treatment with manganese phosphate has required adjustment of treatment conditions to facilitate the reaction. However, the surface roughness of the first film 14 (or side faces 12a and 12b) becomes large due to the adjustment. When such a compression ring is attached to a piston, wear of the ring groove of the piston increases and the piston material (for example, aluminum) is likely to adhere to the compression ring.

On the other hand, the content of P is adjusted to less than 0.010 mass% in advance in the present embodiment, and therefore the local dissolution of the main body 12 in chemical conversion treatment is suppressed and the surface roughness of the first film 14 (or side face 12a) is reduced, and a compression ring having stable dimensions is obtained. As a result thereof, the adhesion of the piston material to the compression ring is suppressed, and lowering of the tension of the compression ring can also be suppressed. Moreover, the compression ring having stable dimensions is attached to a piston, generation of a blow-by gas is suppressed. Furthermore, the surface roughness of the first film 14 is small and the thickness of the first film 14 is uniform, thereby improving the rust prevention function and initial conformability of the compression ring.

Assuming that Fe₃P precipitates along the crystal grain boundaries in the main body 12, when strain is repeatedly or continuously applied to the compression ring, the compression ring behaves as if the strain larger than the actually applied strain were applied. This behavior can be exhibited in an elastic region of the main body 12 in a particularly high temperature state. As a result thereof, a large amount of transitions (linear lattice defects) occurs in the main body 12, and there is a risk that the strength of the compression ring is lowered. On the other hand, since the content of P is less than 0.010 mass% in the present embodiment, the segregation of Fe₃P is suppressed, and lowering of the strength of the compression ring due to the strain is suppressed.

The steel material inevitably contains S (sulfur) as the balance in some cases. When the steel material contains S, FeS is segregated to worsen the reactivity of the main body 12 during chemical conversion treatment. Accordingly, it is more preferable that the content of S as well as P is smaller. In order to suppress the occurrence of the problem of S, the content of S in the steel material may be, for example, 0.002 to 0.020 mass%. The content of S in the steel material is 0.002 to 0.020 mass%, thereby suppressing the segregation of FeS and suppressing lowering of the reactivity of the main body 12 during chemical conversion treatment. The content of S being 0.002 mass% is a lower limit value that is achievable at realistically low cost. Adjusting the content of S in the steel material and the content of P makes it possible to obtain the synergistic effect of greatly improving the reactivity of the main body 12 during chemical conversion treatment. The content of S in the steel material may be 0.002 to 0.015 mass%, 0.002 to 0.016 mass%, 0.008 to 0.020 mass%, or 0.008 to 0.015 mass%.

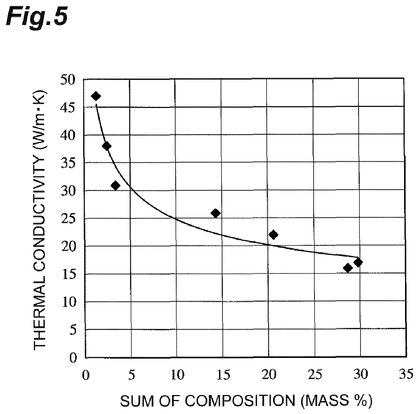

In order to lower the temperature of a combustion chamber wall of an engine, a high thermal conductivity is required for the compression ring. The thermal conduction function of the compression ring depends on the thermal conductivity of the steel material that constitutes the main body 12 and the thermal conductivity, shape, and the like of the first film. The thermal conductivity of the steel material depends on the content of alloying elements contained in the steel material. The contents of alloying elements and content of nitrogen contained in each steel material, the sum of content ratios of alloying elements and nitrogen (sum of composition), and the thermal conductivity of each steel material at 200°C are shown in the following Table 1. The relation between the thermal conductivity and the sum of composition for each steel material is shown in Figure 5. It is to be noted that, among the steel materials A to G in the following Table 1, the compositions of steel materials excluding the composition of steel material C do not satisfy the requirements for a steel material that constitutes the main body according to the present embodiment. As shown in Table 1 and Figure 5, the thermal conductivity of a steel material is higher as the sum of composition in the steel material is smaller.

**[Table 1]**

| | Alloying elements, mass% | | | | | | | | | Sum of composition | Thermal conductivity |
|---|---|---|---|---|---|---|---|---|---|---|---|
| | C | Si | Mn | Cr | Ni | Mo | Cu | V | N | mass% | W/m·K |
| A | 0.87 | 0.5 | 0.5 | 17.5 | - | 1.2 | - | 0.1 | - | 20.67 | 22 |
| B | 0.33 | 0.5 | 0.5 | 13 | - | - | - | - | - | 14.33 | 26 |
| C | 0.55 | 0.25 | 0.8 | 0.8 | - | - | - | - | - | 2.4 | 38 |
| D | 0.55 | 1.4 | 0.65 | 0.65 | - | - | 0.1 | - | - | 3.35 | 31 |
| E | 0.62 | 0.25 | 0.45 | - | - | - | - | - | - | 1.32 | 47 |
| F | 0.04 | 0.5 | 1 | 19 | 9.2 | - | - | - | 0.13 | 29.87 | 17 |
| G | 0.08 | 0.5 | 6.5 | 17 | 4.5 | - | - | - | 0.12 | 28.7 | 16 |

The content of alloying elements contained in the steel material that constitutes the main body 12 gives an influence on the loss of tangential force of the compression ring. The loss of tangential force is a loss of tangential force with the compression ring closed nominal diameter at engine operating conditions based on JIS B 8032-5. There is a tendency that the loss of tangential force of the compression ring becomes high as the amount of alloying elements in the steel material decreases. When the loss of tangential force of the compression ring is high, decline of the tension of the compression ring, deformation of the compression ring, and the like easily occur in an environment where thermal load is high. It is preferable that the loss of tangential force is small to such an extent that the functions of the compression ring can be maintained even when the compression ring is exposed to a high temperature of about 300°C. Accordingly, not only the thermal conductivity but also the loss of tangential force and fatigue strength and the like may be taken into consideration in selecting a steel material. For example, the thermal conductivity of the compression ring 11 may be 35 W/m·K or more, and the loss of tangential force of the compression ring 11 after heating at 300°C for 3 hours may be 4% or less. A thermal conductivity of 35 W/m·K is an excellent value that corresponds to the thermal conductivity of a conventional piston ring that is constituted of conventional flake graphite cast iron. A loss of tangential force of 4% or less is about the same as the loss of tangential force of Si-Cr steel. It is to be noted that, in JIS B 8032-5, the loss of tangential force of a steel ring heated at 300°C for 3 hours is specified as 8% or less.

The cost of a steel material is generally more inexpensive as the amount of alloying elements is smaller. From the standpoint of the market economy, the steel material is more inexpensive when mass-produced more. When the compression ring according to the present embodiment is used for an automobile part such as a piston ring, not only excellent properties but also a competitive price is required for the compression ring. That is, how to reduce production cost of a compression ring may be taken into consideration.

The metal structure of the main body 12 (metal structure of the steel material) may include: a tempered martensitic matrix; and a plurality of spheroidal cementites dispersed in the tempered martensitic matrix. The average particle diameter of the spheroidal cementite may be 0.1 to 1.5 µm. The total amount of alloying elements in the steel material having the metal structure is small, and therefore the thermal conductivity of the steel material is high. However, the loss of tangential force of the main body is high in some cases because the content of Cr and V in such a steel material is small. In order to reduce the loss of tangential force of the steel material having a high thermal conductivity, a wire material may be annealed in the production process of the compression ring to precipitate the spheroidal cementite in the wire material before conducting the oil temper treatment of the wire material formed from the steel material. The oil temper treatment is a treatment conducted in the final stage of a wire-drawing process of the steel material. Moreover, an appropriate amount of spheroidal cementite that is relatively large in size may be dispersed in the tempered martensitic matrix in the wire material by optimizing conditions of the oil temper treatment. As a kind of spheroidal cementite, there is, for example, residual cementite of spring steel to which the oil temper treatment is applied. The residual cementite is a stress concentration source, and is a factor that lowers mechanical properties of a steel wire. However, when the spheroidal cementite is dispersed in the main body of the compression ring, the loss of tangential force of the main body is reduced. It is inferred that strain of a crystal lattice occurs due to the spheroidal cementite left in the tempered martensitic matrix in the metal structure after the oil temper treatment, transfer of transitions and creep are suppressed even at 300°C, and then the loss of tangential force is reduced as a result.

When the average particle diameter of the spheroidal cementite is 0.1 µm or more, the spheroidal cementite does not dissolve in austenite in solutionizing treatment as part of the oil temper treatment. Therefore, the spheroidal cementite having an average particle diameter of 0.1 µm or more is observed in a cross section of the main body of the compression ring after its production. When the average particle diameter of the spheroidal cementite is 1.5 µm or less, fatigue fracture of the main body due to the spheroidal cementite is suppressed. That is, the reduction of the fatigue strength of the compression ring is suppressed. The average particle diameter of the spheroidal cementite may be 0.4 to 1.2 µm, 0.8 to 1.2 µm, or 0.5 to 1.0 µm.

The area occupancy of the spheroidal cementite in a cross section of the metal structure (tempered martensitic matrix) may be 1 to 6%. This occupancy is measured by observation of a microstructure appearing in a cross section of the metal structure. When the area occupancy of the spheroidal cementite is within the above-described range, the thermal conductivity of the compression ring 11 easily reaches 35 W/m·K or more, and the loss of tangential force of the compression ring 11 easily reaches 4% or less. The thermal conductivity in alloy is mainly dominated by the motion of free electrons in crystal grains of metals that constitute the alloy. Therefore, the thermal conductivity is more improved as the amount of solid solution elements are smaller. In the metal structure of the main body 12 according to the present embodiment, the content of Si having a solid solution strengthening property is small as compared with the content of Si in conventional Si-Cr steel, and the content of C that forms an interstitial solid solution is 0.55 mass% or less. Accordingly, it is considered that the thermal conductivity of the compression ring 11 is higher than the thermal conductivity of the conventional Si-Cr steel. It is to be noted that the conventional Si-Cr steel is used as a steel material that constitutes a compression ring, and the thermal conductivity of the conventional Si-Cr steel is about 31 W/m·K.

Since the compression ring 11 comprises the main body 12 constituted of a steel material having the metal structure, both a high thermal conductivity and a small loss of tangential force are achieved in the compression ring 11. That is, even in an environment where thermal load is high, such as an environment in a high compression ratio engine, the tension of the compression ring 11 is difficult to decline, so that the compression ring 11 can effectively dissipate the heat of a piston head to a cooled cylinder wall. Accordingly, knocking can be suppressed without conducting adjustment in such a way that ignition timing is delayed, and an engine can be driven with a high thermal efficiency. Moreover, the temperature of the ring groove of a piston can be decreased by using the compression ring having a high thermal conductivity. Therefore, the wear of the ring groove is further suppressed, and the adhesion of a piston material (for example, aluminum) to the compression ring is further suppressed.

The surface roughness Rz of the first film 14 may be 4.5 µm or less, 4.0 µm or less, 3.7 µm or less, 3.5 µm or less, 3.3 µm or less, 3.1 µm or less, or 3.0 µm or less. When the compression ring 11 in which the surface roughness Rz of the first film 14 is within the above-described range is attached to a piston, the wear of the ring groove of the piston is easily suppressed, and the adhesion of a piston material to the compression ring resulting from the wear of the ring groove is easily suppressed. The surface roughness Rz is measured based on JIS B0601:1982.

Various surface treatments may be applied to the outer circumferential face 12c of the main body 12. The wear resistance and scuff resistance of the main body 12 are improved by the surface treatment. For example, a second film 15 may be provided on the outer circumferential face 12c (outer circumferential sliding face) of the main body 12 by the surface treatment. The second film 15 may cover part or the whole of the outer circumferential face 12c of the main body 12. The second film 15 may be at least one film selected from the group consisting of a titanium nitride (Ti-N) film, a chromium nitride (Cr-N) film, a titanium carbonitride (Ti-C-N) film, a chromium carbonitride (Cr-C-N) film, a chromium (Cr) film, a titanium (Ti) film, and a diamond-like carbon (DLC) film. The second film 15 may contain a plurality of films selected from the group consisting of a titanium nitride film, a chromium nitride film, a titanium carbonitride film, a chromium carbonitride film, a chromium film, a titanium film, and a diamond-like carbon film. That is, the second film 15 may contain a plurality of stacked films having a different composition. It is to be noted that the first film 14 may be provided in place of the second film 15 on the outer circumferential face 12c of the main body 12. Moreover, the first film 14 may be provided on all of the side faces 12a, 12b, outer circumferential face 12c, and inner circumferential face 12d of the main body 12. That is, the film 14 may be provided on the whole surface of the main body 12.

The method of surface treatment and the composition of the second film 15 are selected according to a mating material sliding with the compression ring 11, or use environment of the compression ring 11, and the like. When the second film 15 contains a Cr film, the thermal conductivity of the compression ring 11 is easily improved. When the second film 15 contains a chromium nitride film, the wear resistance and scuff resistance of the compression ring 11 are easily improved. When the compression ring 11 is used for a piston to be inserted into an aluminum cylinder, the DLC film is suitable as the second film 15.

The thickness of the second film 15 is, for example, 10 to 40 µm. The second film 15 is formed by, for example, a PVD method (Physical Vapor Deposition) such as an ion plating method, and by plating processing or nitriding treatment.

### (Second Embodiment)

The compression ring according to the second embodiment is the same as the compression ring according to the first embodiment except that the steel material that constitutes the main body includes Cu. Hereinafter, only the characteristics specific to the compression ring according to the second embodiment will be described.

The main body 12 included in the compression ring according to the second embodiment is constituted of a steel material, the steel material consisting of: 0.45 to 0.55 mass% of C; 0.15 to 0.35 mass% of Si; 0.65 to 0.95 mass% of Mn; 0.80 to 1.10 mass% of Cr; 0.25 mass% or less of V; less than 0.010 mass% of P; 0.02 to 0.25 mass% of Cu (copper); and the balance including Fe and an inevitable impurity. The content of Cu in the steel material may be 0.02 to 0.25 mass%, 0.02 to 0.20 mass%, 0.02 to 0.16 mass%, 0.04 to 0.25 mass%, 0.04 to 0.20 mass%, 0.04 to 0.16 mass%, or 0.16 to 0.25 mass%.

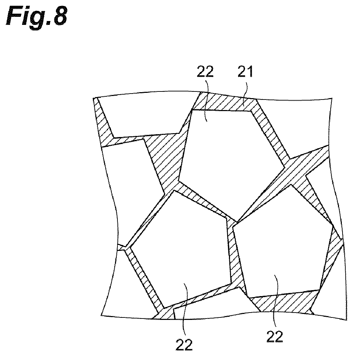

In the production of the compression ring according to the second embodiment, a wire material is prepared by wire-drawing of the steel material in the same manner as in the first embodiment. Cu that is solid-soluted in the wire material in a supersaturation state precipitates on the crystal grain boundaries as a simple substance of Cu 21 as shown in Figure 8 after hardening and tempering of the wire material are conducted. Cu that has precipitated on the crystal grain boundaries are extremely soft and therefore exhibits a function of matching the crystal grains 22 adjacent to each other. The occurrence of fracture (fatigue fracture) of the main body 12 due to metal fatigue is suppressed by forming the main body 12 from the wire material on which such a Cu simple substance has precipitated. Cu easily precipitates even at a high temperature of about 300°C, and therefore the fatigue strength of the compression ring at high temperatures is improved. In order to obtain such an effect of Cu, the content of Cu in the steel material is required to be 0.02 mass% or more. From the same reason, it is preferable that the content of Cu in the steel material is 0.04 mass% or more. When the content of Cu in the steel material is 0.25 mass% or less, the reactivity for forming the first film 14 during chemical conversion treatment is easily improved, and the reactivity of the main body 12 in Cr plating for forming the second film 15 is also easily improved.

Cu improves the corrosion resistance of the compression ring 11. An amorphous coating film containing Cu is formed on the surface of an Fe phase in the steel material due to Cu contained in the steel material. The amorphous coating film improves the corrosion resistance of the compression ring. In the production process of the compression ring 11, the amorphous coating film containing Cu suppresses the occurrence of rust on the surface of the steel material. Moreover, the amorphous coating film containing Cu alleviates the reactivity of the main body 12 in chemical conversion treatment, and local reaction of the main body 12 is suppressed. As a result thereof, the number of pits (erosion) formed on the surface (side face 12a or 12b) of the main body 12 becomes small and the depth of pits becomes shallow. Accordingly, the reduction of the fatigue strength due to corrosion pits (notches) is suppressed. Moreover, the reduction in the number of pits alleviates the aggressiveness of the compression ring to the piston groove, and the wear of the piston groove is suppressed.

### Examples

The present invention will be described in more detail by the following Examples, however the present invention is not limited to these Examples.

### (Examples 1 to 4 and Comparative Example 1)

Compression rings were prepared by the following method using each of the steel materials J1, J2, J3, J4, and C1 having the composition shown in the following Table 2. It is to be noted that any of the steel materials contains iron as a matter of course in addition to the elements shown in the following Table 2. The compression ring using the steel material J1 is Example 1. The compression ring using the steel material J2 is Example 2. The compression ring using the steel material J3 is Example 3. The compression ring using the steel material J4 is Example 4. The compression ring using the steel material C1 is Comparative Example 1. The steel material C1 corresponds to SUP10. Hereinafter, Example 1 is written as J1, Example 2 is written as J2, Example 3 is written as J3, Example 4 is written as J4, and Comparative Example 1 is written as C1 according to circumstances.

A wire-drawing process was applied to the steel materials. In the wire-drawing process, heat treatment at 900°C, patenting treatment at 600°C, pickling treatment, wire-drawing treatment, heating treatment, annealing treatment at 700°C, pickling treatment, wire-drawing treatment, and oil temper treatment were conducted in this order. In the oil temper treatment, heating of the steel materials at 930°C, hardening of the steel materials in oil, and tempering were conducted in this order.

Through the wire-drawing process, wire materials having a rectangular cross section were obtained. The thickness of the cross section of the wire materials was 1.0 mm, the width of the cross section was 2.3 mm. The wire materials were molded to prepare annular main bodies having a diameter of 73 mmφ. A CrN film (second film) was formed on the outer circumferential fa
ce of the main body by ion plating. Moreover, the first film containing manganese phosphate was formed on the side face of the main body by chemical conversion treatment.

Compression rings were prepared through the above-described process.

The surface roughness Rz of the first film and surface roughness Rz of the side face of the main body after removing the first film were measured for each compression ring. The measurement results are shown in Table 2. The numerical values written in the column of "immediately after chemical conversion treatment" in Table 2 are surface roughnesses of the first films. The numerical values written in the column of "after removing coating film" in Table 2 are surface roughnesses of the side faces of the main bodies after removing the first films.

As shown in the following Table 2, it was confirmed that the surface roughnesses of the first films in Examples 1 to 4 were smaller than the surface roughness of the first film in Comparative Example 1. Moreover, it was confirmed that the surface roughnesses of the side faces of the main bodies after removing the first films in Examples 1 to 4 were smaller than the surface roughness of the side face of the main body after removing the first film in Comparative Example 1.

A cross section perpendicular to the side face of the main body in each compression ring was observed to evaluate the smoothness of the side face (interface of the side face of the main body and the first film) and the number of pits (erosion) on the side face. The side faces in Examples 1 and 2 were smoother than the side faces in Examples 3 and 4. The numbers of pits (erosion) on the side faces in Examples 1 and 2 were smaller than the numbers of pits on the side faces in Examples 3 and 4. The side faces in Examples 3 and 4 were smoother than the side face in Comparative Example 1. The numbers of pits (erosion) on the side faces in Examples 3 and 4 were smaller than the number of pits on the side face in Comparative Example 1. The side face in Comparative Example 1 was rougher than the side faces in Examples 1 to 4. The number of pits on the side face in Comparative Example 1 was larger than the numbers of pits on the side faces in Examples 1 to 4.

### [Ring Groove Wear Test and Aluminum Adhesion Test]

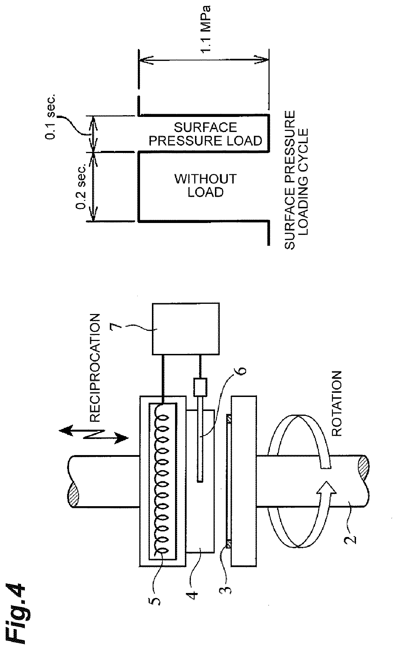

The following ring groove wear test and aluminum adhesion test were conducted using each compression ring and an apparatus (Tribolic IV manufactured by Riken Corporation) illustrated in Figure 4.

The compression ring 3 was mounted on a turntable 2, and the center of the compression ring 3 was aligned with the rotation axis of the turntable 2. The turntable 2 was rotated at a low speed in one direction, the temperature of a piston material 4 was adjusted at 240°C using a heater 5, a thermocouple 6, and a temperature adjuster 7, and the piston material 4 was reciprocated in the rotation axis direction of the turntable 2 at a constant period. The side face of the compression ring 3 was brought into contact with the surface of the piston material 4 by such operation to periodically apply surface pressure load to the side face of the compression ring 3 and the surface of the piston material 4. That is, the surface pressure loading cycle illustrated in Figure 4 was repeated. The amplitude of the surface pressure load was adjusted to 1.1 MPa. As the piston material, an AC8A material being an aluminum alloy casting was used. A lubricant was applied, before starting the test, on the surface of the compression ring 3 making contact with the surface of the piston material 4. As the lubricant, an additive-free base oil, SAE30, was used. The test method described-above is common to the ring groove wear test and the aluminum adhesion test.

In the ring groove wear test, the rotation of the turntable 2 and the reciprocation of the piston material 4 were repeated for 1 hour. Thereafter, the depth of a groove on the surface of the piston material 4, the groove formed by slides of the compression ring 3 to the piston material 4 was measured. The depth of the groove was regarded as the wear amount of the ring groove. The wear amount of the ring groove formed using each compression ring is shown in the following Table 2.

As shown in the following Table 2, the wear amounts of the ring grooves in Examples 1 to 4 were less than a half of the wear amount of the ring groove in Comparative Example 1.

In the aluminum adhesion test, the rotation of the turntable 2 and the reciprocation of the piston material 4 were repeated until aluminum contained in the piston material 4 adhered to the compression ring 3. And the number of reciprocations of the piston material 4 until aluminum adhered to the compression ring 3 was measured. The measurement results are shown in the following Table 2. At the time when aluminum adheres to the compression ring 3, the torque of the turntable 2 varies, and the temperature of the piston material 4 abruptly rises. The number of reciprocations of the piston material 4 until this time being large means that the piston material 4 is difficult to adhere to the compression ring 3. Moreover, the number of reciprocations of the piston material 4 until this time being large means that the life time of the piston material 4 is long.

As shown in the following Table 2, the numbers of reciprocations of the piston materials 4 in Examples 1 to 4 were larger than the number of reciprocations of the piston material 4 in Comparative Example 1.

**[Table 2]**

| | Composition (mass%) | | | | | | | Surface roughness Rz (µm) | | Erosion state in cross section observation | Wear amount of ring groove (µm) | Aluminum adhesion test |
|---|---|---|---|---|---|---|---|---|---|---|---|---|
| | C | Si | Mn | P | S | Cr | V | Immediately after chemical conversion treatment | After removing coating film | | | Number of times until adhesion occurs (times) |
| J1 | 0.52 | 0.22 | 0.88 | 0.003 | 0.008 | 0.95 | 0.18 | 3.5 | 2.3 | ⊚: extremely small amount of erosion | 0.07 | 22,523 |
| J2 | 0.50 | 0.27 | 0.82 | 0.007 | 0.015 | 1.08 | 0.18 | 3.3 | 2.1 | ⊚: extremely small amount of erosion | 0.08 | 21,846 |
| J3 | 0.51 | 0.24 | 0.86 | 0.008 | 0.020 | 1.03 | 0.20 | 3.7 | 3.0 | ○: small amount of erosion | 0.10 | 20,850 |
| J4 | 0.51 | 0.24 | 0.86 | 0.009 | 0.008 | 1.03 | 0.17 | 4.0 | 3.5 | ○: small amount of erosion | 0.12 | 20,693 |
| C1 | 0.52 | 0.23 | 0.85 | 0.030 | 0.025 | 1.01 | 0.18 | 5.8 | 4.9 | × : large amount of erosion | 0.30 | 18,444 |

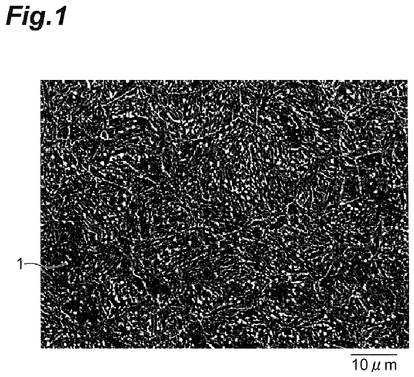

The metal structure in a cross section of the wire material in Example 1 was observed with a scanning electron microscope. An image of the metal structure (microstructure) in Example 1 is shown in Figure 1. As a result of the observation, it was confirmed that the metal structure in Example 1 contained a tempered martensitic matrix and a plurality of fine spheroidal cementites 1 dispersed in the tempered martensitic matrix. White particles in the image were found to be spheroidal cementite 1. Moreover, the average particle diameter of the spheroidal cementite was determined from the analysis conducted by enlarging the image of the metal structure. The average particle diameter is the average of particle diameters of about 3000 to 5000 spheroidal cementites. The area occupancy (area ratio) of the spheroidal cementite in a cross section of the metal structure was measured by a similar method. The measured average particle diameters and area ratios are shown in the following Table 3.

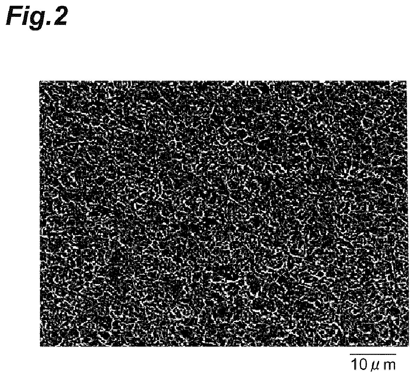

The metal structure in a cross section of the wire material in Comparative Example 1 was observed with a scanning electron microscope. The image of the metal structure (microstructure) in Comparative Example 1 is shown in Figure 2. As a result of the observation, the metal structure in Comparative Example 1 was a uniform tempered martensitic matrix. Spheroidal cementite was not observed in the metal structure in Comparative Example 1.

### (Examples 5 and 6)

A compression ring of Example 5 (J5) was prepared by the same method as in Example 1 except that the heating temperature before hardening in the oil temper treatment was adjusted to 980°C. A compression ring of Example 6 (J6) was prepared by the same method as in Example 1 except that the heating temperature before hardening in the oil temper treatment was adjusted to 820°C. The adjustment of the heating temperature before hardening in the oil temper treatment intends to form a metal structure of a steel material containing a tempered martensitic matrix and spheroidal cementite dispersed in the tempered martensitic matrix.

The metal structures in cross sections of the wire materials in Examples 5 and 6 were observed with a scanning electron microscope. As a result of the observation, it was confirmed that the metal structures in each of Examples 5 and 6 contained a tempered martensitic matrix and a plurality of fine spheroidal cementites dispersed in the tempered martensitic matrix. The average particle diameter of the spheroidal cementite in each of Examples 5 and 6 was determined by the same method as in Example 1. The area occupancy (area ratio) of the spheroidal cementite in a cross section of the metal structure in each of Examples 5 and 6 was measured by the same method as in Example 1. The measured average particle diameters and area ratios are shown in the following Table 3.

### (Comparative Examples 2 to 4)

In the preparation of a compression ring of Comparative Example 2, the steel material C1 (SUP10 equivalent) that was the same steel material as in Comparative Example 1 was used as the steel material. In the wire-drawing process in Comparative Example 2, patenting treatment at 600°C was conducted in place of the annealing treatment. That is, the patenting treatment was conducted twice in Comparative Example 2. A compression ring of Comparative Example 2 (C2) was prepared by the same method as in Example 1 except these matters. A compression ring of Comparative Example 3 (C3) was prepared by the same method as in Comparative Example 2 except that Si-Cr steel (JIS SWOSC-V) was used as the steel material. A compression ring of Comparative Example 4 (C4) was prepared by the same method as in Comparative Example 2 except that a hard steel wire (JIS SWRH62A) was used as the steel material.

### [Measurement of Thermal Conductivity]

The thermal conductivity of each compression ring of Examples 1,5, and 6, and Comparative Examples 2 to 4 was measured by a laser flash method. The measurement results are shown in the following Table 3. As shown in the following Table 3, the thermal conductivities in Examples 1, 5, and 6 were about the same as the thermal conductivity in Comparative Example 2. The thermal conductivities in Examples 1, 5, and 6 were higher than the thermal conductivity in Comparative Example 3 and lower than the thermal conductivity in Comparative Example 4. It was confirmed from these measurement results that the thermal conductivity of the compression ring depended on the composition of the steel material (the amount of alloying elements in the steel material) used for preparing a compression ring.

### [Thermal Settling Test]

The following thermal settling test was conducted using each compression ring of Examples 1, 5, and 6, and Comparative Examples 2 to 4.

The thermal settling test is a test in which the loss of tangential force of a compression ring is measured based on JIS B 8032-5. In the thermal settling test, the tangential force of a compression ring was measured at first. Subsequently, the joint of the compression ring was closed, and the compression ring was heated at 300°C for 3 hours. After heating, the tangential force of the compression ring was measured again. From these measurement results, the loss of tangential force resulting from heating was measured.

The above-described test using each compression ring was repeated 5 times to determine the loss of tangential forces, and the average value of the loss of tangential forces was determined. The average value (loss of tangential force) of the loss of tangential forces in each of Examples and Comparative Examples is shown in the following Table 3. Moreover, when the loss of tangential force in Comparative Example 2 is assumed to be 100, the relative value of the loss of tangential force in each of Examples and Comparative Examples is shown in the column of "Comparison" in the following Table 2.

Even though the thermal conductivities in Examples 1, 5, and 6 were about the same as the thermal conductivity in Comparative Example 2, the loss of tangential forces in Examples 1, 5, and 6 were lower than the loss of tangential force in Comparative Example 2. The loss of tangential forces in Examples 1 and 6 achieved a target value of 4% or less. It is to be noted that variation in loss of tangential forces measured 5 times was small in Examples 1 and 6.

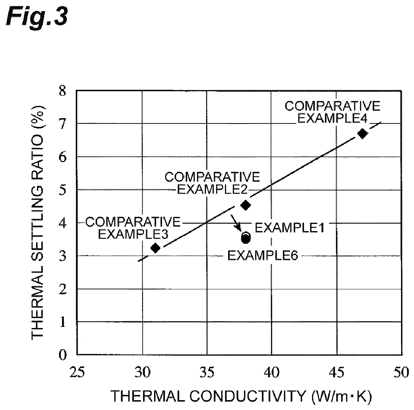

The relation between the loss of tangential force and the thermal conductivity is shown in Figure 3. As shown in Figure 3, Comparative Examples 2 to 4 show a tendency that the loss of tangential force increases as the thermal conductivity increases. Figure 3 demonstrates that even though the thermal conductivities in Examples 1 and 6 were about the same as the thermal conductivity in Comparative Example 2, the loss of tangential forces in Examples 1 and 6 were lower than the loss of tangential force in Comparative Example 2.

**[Table 3]**

| | Outer circumferential face | Side face | Spheroidal cementite | | Thermal settling resistance | | Thermal conductivity |
|---|---|---|---|---|---|---|---|
| | Second film | First film | Average particle diameter µm | Area ratio % | Loss of tangential force % | Comparison | W/m·K |
| J1 | CrN | Manganese phosphate | 0.8 | 2.4 | 3.5 | 76 | 38 |
| J5 | CrN | Manganese phosphate | 0.4 | 0.3 | 4.4 | 96 | 38 |
| J6 | CrN | Manganese phosphate | 1.2 | 5.3 | 3.4 | 74 | 38 |
| C2 | CrN | Manganese phosphate | - | - | 4.6 | 100 | 38 |
| C3 | CrN | Manganese phosphate | - | - | 3.2 | 70 | 31 |
| C4 | CrN | Manganese phosphate | - | - | 6.7 | 146 | 47 |

### (Examples 11 to 14 and Comparative Example 11)

Compression rings were prepared using each of the steel materials J11, J12, J13, J14, and C11 having the composition shown in the following Table 4. It is to be noted that any of the steel materials contains iron as a matter of course in addition to the elements shown in the following Table 4. The compression ring using the steel material J11 is Example 11. The compression ring using the steel material J12 is Example 12. The compression ring using the steel material J13 is Example 13. The compression ring using the steel material J14 is Example 14. The compression ring using the steel material C11 is Comparative Example 11. Hereinafter, Example 11 is written as J11, Example 12 is written as J12, Example 13 is written as J13, Example 14 is written as J14, and Comparative Example 11 is written as C11 according to circumstances.

The method for preparing each compression ring of Examples 11 to 14 and Comparative Example 11 was the same as in Example 1 except the compositions of the steel materials.

The surface roughness Rz of the first film and surface roughness Rz of the side face of the main body after removing the first film for each compression ring were measured. The measurement results are shown in Table 4. The numerical values written in the column of "immediately after chemical conversion treatment" in Table 4 are surface roughnesses of the first films. The numerical values written in the column of "after removing coating film" in Table 4 are surface roughnesses of the side faces of the main bodies after removing the first films.

As shown in the following Table 4, it was confirmed that the surface roughnesses of the first films in Examples 11 to 14 were smaller than the surface roughness of the first film in Comparative Example 11. Moreover, it was confirmed that the surface roughnesses of the side faces of the main bodies after removing the first films in Examples 11 to 14 were smaller than the surface roughness of the side face of the main body after removing the first film in Comparative Example 11.

A cross section perpendicular to the side face of the main body in each compression ring was observed to evaluate the smoothness of the side face (interface of the side face of the main body and the first film) and the number of pits (erosion) on the side face. The side faces in Examples 11 to 13 were smoother than the side face in Example 14. The numbers of pits (erosion) on the side faces in Examples 11 to 13 were smaller than the number of pits on the side face in Example 14. The side face in Example 14 was smoother than the side face in Comparative Example 11. The numbers of pits (erosion) on the side face in Example 14 was smaller than the number of pits on the side face in Comparative Example 11. The side face in Comparative Example 11 was rougher than the side faces in Examples 11 to 14. The number of pits on the side face in Comparative Example 11 was larger than the numbers of pits on the side faces in Examples 11 to 14.

The width W0 of the main body immediately before chemical conversion treatment in each of Examples 11 to 14 and Comparative Example 11 was measured. The width W0 is the width of a side face of the main body where the first film is to be formed. The thickness T0 of the main body immediately before chemical conversion treatment in each of Examples 11 to 14 and Comparative Example 11 was measured. The thickness T0 is the thickness of the main body in a direction perpendicular to the side face.

The width W1 of the main body after the first film was removed from each compression ring of Examples 11 to 14 and Comparative Example 11 was measured. The width W1 corresponds to the width W0. The thickness T1 of the main body after the first film was removed from each compression ring of Examples 11 to 14 and Comparative Example 11 was measured. The thickness T1 corresponds to the thickness T0.

(W0 - W1) for each of Examples and Comparative Example is written in the column of "Ring width size" in the following Table 4. (TO - T1) for each of Examples and Comparative Example is written in the column of "Ring thickness size" in the following Table 4. The (W0 - W1) and (TO - T1) mean the amount of change in the size of the main body resulting from chemical conversion treatment. As shown in the following Table 4, it was confirmed that the amounts of change in the size in Examples 11 to 14 were smaller than the amount of change in the size in Comparative Example 11.

### [Fatigue Test of Compression Ring]

The following fatigue test was conducted using each compression ring of Examples 11 to 14 and Comparative Example 11.

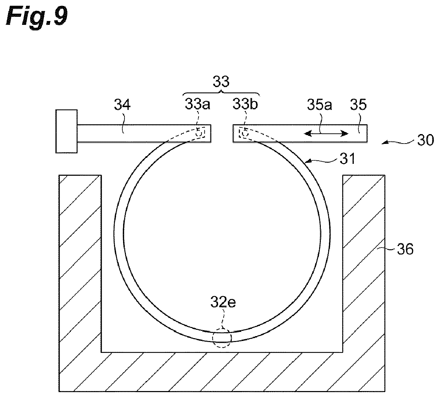

In the fatigue test of compression rings, an apparatus illustrated in Figure 9 was used. As shown in Figure 9, the apparatus 30 includes a fixing section 34 fixing a compression ring 31, a working section 35, and a heater 36 heating the compression ring 31. In the fatigue test, one end 33a of the compression ring 31, the end being positioned at the joint 33, was attached to the fixing section 34 at first. Moreover, the other end 33b of the compression ring 31, the end being positioned at the joint 33, was attached to the working section 35. The working section 35 was reciprocated along the directions of an arrow 35a in such a manner that the joint 33 of the compression ring 31 was opened and closed while holding the temperature of the compression ring 31 at room temperature. The reciprocation of the working section 35 was repeated 107 times. After repeating the reciprocation, stress was applied from the working section 35 to the compression ring 31 in a direction to widen the joint 33. The stress was gradually increased to measure the stress (fatigue limit stress) when a fatigue crack occurs at a portion 32e positioned to the opposite side of the joint 33 in the main body of the compression ring 31. The fatigue limit stress for each compression ring at room temperature is shown in the following Table 4.

The fatigue limit stress for each compression ring at 300°C was measured by the same method as the above-described method except that the temperature of the compression ring 31 was held at 300°C with a heater 36. The measurement results are shown in the following Table 4.

As shown in the following Table 4, it was confirmed that the fatigue limit stresses at 300°C in Examples 11 to 14 were larger than the fatigue limit stress at 300°C in Comparative Example 11. That is, it was confirmed that the compression rings of Examples 11 to 14 suppressed the occurrence of fatigue fracture at a high temperature when compared with the compression ring of Comparative Example 11.

**[Table 4]**

| | Chemical composition (mass%) | | | | | | | Surface roughness Rz (µm) | | Erosion state in cross section observation | | Size change amount (µm) (before chemical conversion treatment - after removal) | | Fatigue limit stress (MPa) (number of repetition times ×10⁷ times) | |
|---|---|---|---|---|---|---|---|---|---|---|---|---|---|---|---|
| | C | Si | Mn | P | Cr | V | Cu | After chemical conversion treatment | After removing coating film | | | Ring width size | Ring thickness size | Room temperature | 300°C |
| J11 | 0.47 | 0.26 | 0.84 | 0.008 | 1.04 | 0.15 | 0.16 | 2.8 | 2.5 | ⊚ | extremely small amount of erosion | 0 to 0.5 | 0 to 0.5 | 1,025 | 1,234 |
| J12 | 0.52 | 0.22 | 0.88 | 0.003 | 0.95 | 0.18 | 0.20 | 3.1 | 2.3 | ⊚ | extremely small amount of erosion | 0 to 0.5 | 0 to 0.5 | 1,033 | 1,245 |
| J13 | 0.50 | 0.24 | 0.86 | 0.004 | 1.03 | 0.15 | 0.25 | 3.0 | 2.1 | ⊚ | extremely small amount of erosion | 0 to 0.5 | 0 to 0.5 | 1,059 | 1,275 |
| J14 | 0.51 | 0.24 | 0.86 | 0.009 | 0.98 | 0.16 | 0.04 | 5.0 | 4.3 | ○ | small amount of erosion | 0.8 to 1.2 | 0.4 to 0.8 | 1,030 | 1,240 |
| C11 | 0.52 | 0.23 | 0.85 | 0.030 | 1.01 | 0.18 | 0.01 | 5.8 | 4.9 | × | large amount of erosion | 1.6 to 2.2 | 0.8 to 1.2 | 1,029 | 1,035 |

### Industrial Applicability

The compression ring according to the present invention is usable as, for example, a piston ring of an engine for automobiles.

### Reference Signs List

1 ... Spheroidal cementite
2 ... Turntable
3, 11 ... Compression ring
4 ... Piston material
5 ... Heater
6 ... Thermocouple
7 ... Temperature adjuster
12 ... Main body
12a, 12b ... Side face
12c ... Outer circumferential face
12d ... Inner circumferential face
13 ... Joint
14 ... First film
15 ... Second film
21 ... Cu simple substance
22 ... Crystal grain

## Claims

1. A compression ring comprising an annular main body constituted of a steel material, the steel material consisting of:
0.45 to 0.55 mass% of C;
0.15 to 0.35 mass% of Si;
0.65 to 0.95 mass% of Mn;
0.80 to 1.10 mass% of Cr;
0.25 mass% or less of V;
less than 0.010 mass% of P; and
a balance including Fe and an inevitable impurity.

2. A compression ring comprising an annular main body constituted of a steel material, the steel material consisting of:
0.45 to 0.55 mass% of C;
0.15 to 0.35 mass% of Si;
0.65 to 0.95 mass% of Mn;
0.80 to 1.10 mass% of Cr;
0.25 mass% or less of V;
less than 0.010 mass% of P;
0.02 to 0.25 mass% of Cu; and
a balance including Fe and an inevitable impurity.

3. The compression ring according to claim 1 or 2, comprising a first film including a phosphate, the first film provided on at least one of planar side faces facing each other in parallel on a surface of the main body, or provided on an outer circumferential face or inner circumferential face of the main body.

4. The compression ring according to claim 3,
wherein a surface roughness Rz of the first film is 4.5 µm or less.

5. The compression ring according to any one of claims 1 to 4,
wherein a content of V in the steel material is less than 0.15 mass%.

6. The compression ring according to any one of claims 1 to 5,
wherein a metal structure of the main body is a metal structure including spheroidal cementite dispersed in a tempered martensitic matrix,
wherein an average particle diameter of the spheroidal cementite is 0.1 to 1.5 µm, and
wherein an area occupancy of the spheroidal cementite in a cross section of the metal structure is 1 to 6%.

7. The compression ring according to any one of claims 1 to 6,
wherein a thermal conductivity is 35 W/m·K or more, and
wherein a loss of tangential force after heating at 300°C for 3 hours is 4% or less.

8. The compression ring according to any one of claims 1 to 7, comprising a second film provided on an outer circumferential face of the main body, the second film having at least one film selected from the group consisting of a titanium nitride film, a chromium nitride film, a titanium carbonitride film, a chromium carbonitride film, a chromium film, a titanium film, and a diamond-like carbon film.
